# EUROPÄISCHE PATENTSCHRIFT

(11) **EP 1 106 045 B1**
(45) Veröffentlichungstag und Bekanntmachung des Hinweises auf die Patenterteilung: **07.07.2004**
(21) Anmeldenummer: 00125852.4
(22) Anmeldetag: 25.11.2000
(51) Int. Cl.: A01C 17/00

(54) **Schleuderdüngerstreuer**
Centrifugal fertiliser spreader
Epandeur d'engrais centrifuge

(30) Priorität: 03.12.1999 DE 19958451
(43) Veröffentlichungstag der Anmeldung: 13.06.2001
(73) Patentinhaber: Amazonen-Werke H. Dreyer GmbH & Co. KG, 49205 Hasbergen (DE)
(72) Erfinder: Dreyer, Heinz, Dr. Dipl.-Ing., 49205 Hasbergen (DE)

(56) Entgegenhaltungen:
- EP-A- 0 160 321
- EP-A- 0 246 575
- EP-A- 0 281 886
- EP-A- 0 702 889
- DE-A- 3 820 681

## Beschreibung

Die Erfindung betrifft einen Schleuderdüngerstreuer gemäß des Oberbegriffes des Patentanspruches 1.

Die europäische Offenlegungsschrift 0 127 922 zeigt einen Zentrifugaldüngerstreuer mit einem Dosierorgan aufweisenden Vorratsbehälter, unter dem zumindest zwei Wurfschaufeln aufweisende und rotierend angetriebene Schleuderscheiben angeordnet sind, wobei jede Schleuderscheibe durch das Abschleudern der Düngerpartikel einen Streufächer erzeugt, wobei die Schleuderscheiben in einem einander entgegengesetzten Drehsinn angetrieben sind, und in einander zugewandten Bereich, bei Anordnung hinter dem Ackerschlepper gegen die Fahrtrichtung drehen, wobei Streufächer erzeugt werden, die sich um zumindest 50 Grad überdecken, vorzugsweise zumindest annähernd vollständig überdecken, wobei außerhalb der Rotationsbahn der äußeren Enden der Wurfschaufeln zumindest eine Leitelemente aufweisende Grenzstreueinrichtung zur Erzeugung eines Streubildes mit einer zur Grenze steil abfallenden Streuflanke und zur Begrenzung der Wurfweite der Düngerpartikel im Grenzbereich angeordnet ist.

Um bei dieser Maschine das Grenzstreuen durchzuführen, sind Leitelemente aufweisende Grenzstreueinrichtungen zur Erzeugung eines Streubildes mit einer zur Grenze steil abfallenden Streuflanke und zur Begrenzung der Wurfweite der Düngerpartikel im Grenzbereich vorgesehen. Bei dieser Grenzstreueinrichtung werden die von den Schleuderscheiben abgeschleuderten Düngerpartikel sehr stark abgebremst. Die Leitelemente sind als Bremsplatten ausgebildet und bremsen die abgeschleuderten Düngerpartikel so stark ab, daß sie nicht über die Grenze hinausfliegen. Durch dieses sehr starke Abbremsen wird der Dünger zerschlagen und zerrieben. Hierdurch sind nur verhältnismäßig kleine Grenzstreuabstände zu verwirklichen. Die Düngerkörner werden durch die Bremsplatten nicht umgelenkt, um gezielt bis an die Grenze geworfen zu werden, sondern es wird die Geschwindigkeitsenergie durch Bremsplatten, ähnlich wie beim dem Abbremsen von Fahrzeugen, vernichtet. Dieses bedeutet, daß die Länge der Flugbahnen der Düngerkörner durch das Abbremsen erheblich verkürzt wird.

Der Erfindung liegt die Aufgabe zugrunde, bei einem Schleuderdüngerstreuer mit mehr als zwei Schleuderscheiben, dessen Streufächer sich vorzugsweise zumindest annähernd vollständig überdecken, in einfacher Weise ein Grenzstreuen mit großer Arbeitsbreite durchführen zu können.

Diese Aufgabe wird in erfindungsgemäßer Weise durch die Merkmale des Anspruches 1 gelöst. Infolge dieser Maßnahmen werden die Wurfbahnen beider Streufächer im der Grenze benachbarten Bereich durch die Leitelemente der Grenzstreueinrichtung in ihrer Wurfbahn beeinflußt, so daß auf der der Grenze zugewandten Seite ein Streubild mit einer zur Grenze steil abfallenden Streuflanke erzielt wird.

Ein weiches Umlenken des Düngers zur Erzielung des Grenzstreubildes der Düngerkörner beider Streufächer im der Grenze benachbarten Bereich läßt sich in einfacher Weise dadurch verwirklichen, daß die Leitelemente der Grenzstreueinrichtung im der Schleuderscheibe zugewandten Bereich jeweils etwa tangential zur Abwurfrichtung der Düngerkörner angeordnet sind und im sich anschließendem Bereich, die die Ablenkrichtung festlegt, gegenüber der ursprünglichen Abwurfrichtung entgegengesetzt der Drehrichtung der Wurfschaufeln und nach hinten ablenkend angestellt sind. Infolge dieser Maßnahmen ergibt sich auch bei großen Arbeitsbreiten ein gleichmäßiges Grenzstreubild.

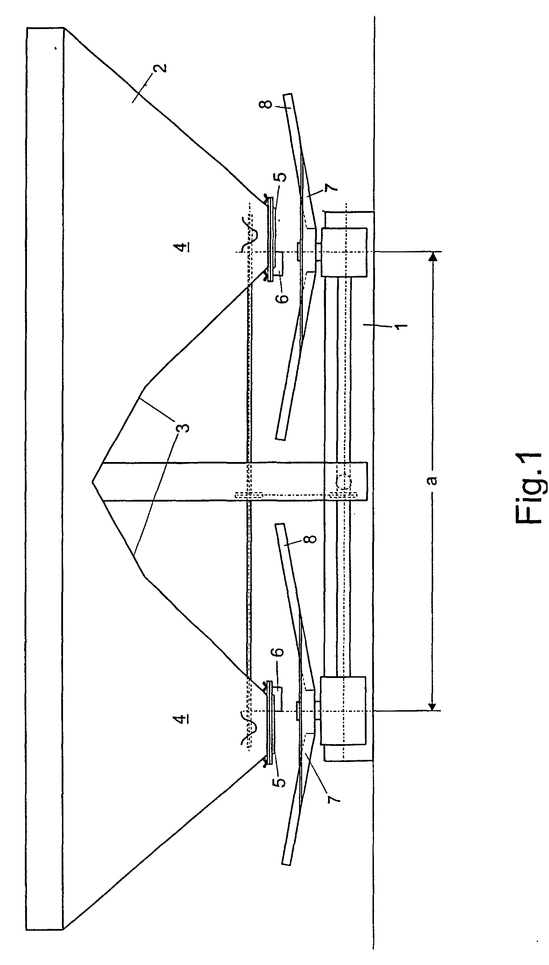

Weitere Einzelheiten der Erfindung sind den übrigen Unteransprüchen, der Beispielsbeschreibung und den Zeichnungen zu entnehmen. Hierbei zeigen
- Fig.1: einen Schleuderdüngerstreuer in der Ansicht von hinten und in Prinzipdarstellung,
- Fig.2: die von den Schleuderscheiben erzeugten Streufächer ohne Einsatz der Grenzstreueinrichtung und
- Fig.3: die von den Schleuderscheiben erzeugten Streufächer mit Einsatz der Grenzstreueinrichtung.

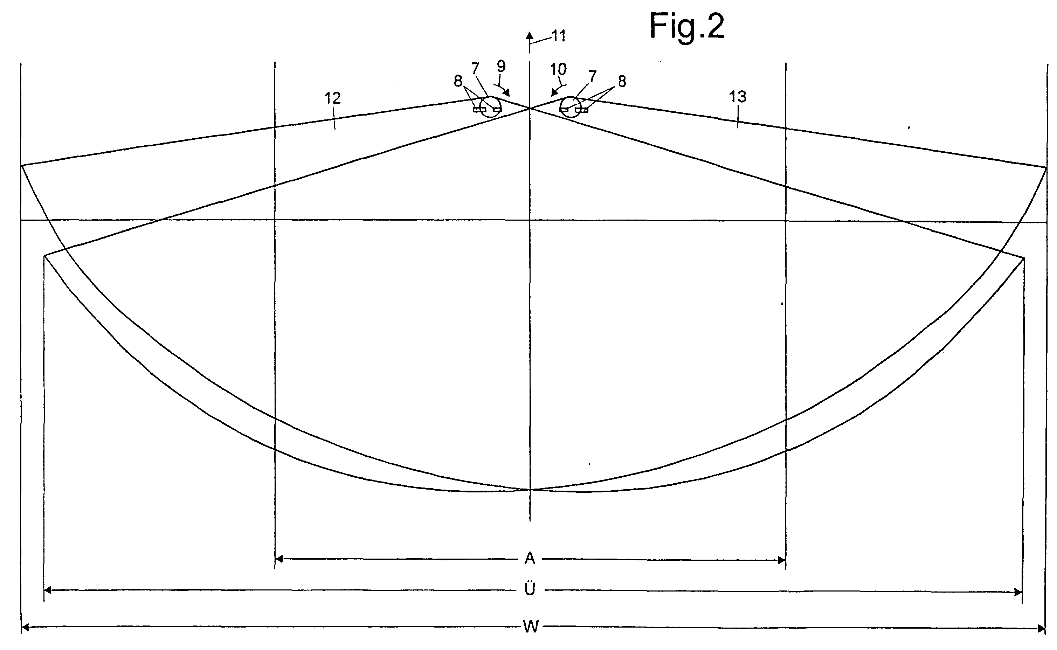

Der Schleuderdüngerstreuer weist den Rahmen 1 und den Vorratsbehälter 2 auf. Der Vorratsbehälter ist durch das dachformige Mittelteil 3 in die beiden Auslauftrichter 4 unterteilt, welchem jeweils die einstellbaren Dosierorgane 5 mit ihren Einstellelementen 6 zugeordnet sind. Unterhalb der Dosierorgane 5 sind die mittels eines motorischen Antriebes rotierend antreibbaren Schleuderscheiben 7 angeordnet. Auf den Schleuderscheiben 7 sind die Wurfschaufeln 8 angeordnet. Die Schleuderscheiben 7 werden, wie Fig.2 schematisch zeigt, in einem einander entgegengesetzten Drehsinn gemäß der Pfeile 9 und 10 angetrieben und drehen im einander zugewandten Bereich, bei Anordnung hinter dem Ackerschlepper, gegen die Fahrtrichtung 11. Die Wurfschaufeln 8 sind auf den Schleuderscheiben 7 winkelverschwenkbar und in verschiedenen Positionen festsetzbar angeordnet. Der Achsabstand a der Schleuderscheiben 7 zueinander beträgt zumindest 1200, vorzugsweise 1500mm. An Stelle die Wurfschaufeln 8 winkelverschwenkbar auf den Schleuderscheiben 7 anzuordnen, ist es auch möglich, die Schleuderscheiben austauschbar auf ihren Antriebswellen anzuordnen und gegen Schleuderscheiben mit anders ausgebildeten oder mit anderen Winkeln angestellten Schleuderscheiben austauschbar zu gestalten.

Mit Hilfe verschiedener Einstellmaßnahmen der Dosierorgane und Schleuderscheiben zueinander sowie der Schaufelanstellung lassen sich die in den Fig.2-4 dargestellten, verschiedenen Streufächer-überdeckungsgrade erreichen, was im folgenden naher erläutert wird.

Durch die Einstellung der Wurfschaufeln 8 auf den Schleuderscheiben 7 in ihrer Winkelposition oder durch die Verstellung der Schleuderscheiben 7 gegenüber den Dosierorganen 5 oder die Verstellung der Dosierorgane 5 gegenüber den Schleuderscheiben 7 läßt sich die Aufgabefläche des Düngers auf den Schleuderscheiben 7 in verschiedenen Positionen einstellen, so daß sich die in den Fig.2-4 dargestellten Streufächerüberdeckungsgrade oder weitere Zwischen-überdeckungsgrade erreichen lassen.

Durch eine entsprechende Einstellung der Aufgabenfläche des Düngers auf den Schleuderscheiben 7 läßt sich gemäß Fig.2 eine fast vollständige Überdeckung der von den beiden Schleuderscheiben 7 mittels der Wurfschaufeln 8 abgeschleuderten Düngepartikel erzeugten Streufächer 12 und 13 erzielen. Hierbei überdecken sich die Streufächer 12 und 13 bei der Gesamtwurfweite W mit den Überdeckungsgrad Ü annähernd vollständig. Die Arbeitsbreite A beträgt hierbei die halbe Wurfweite W des Düngerstreuers.

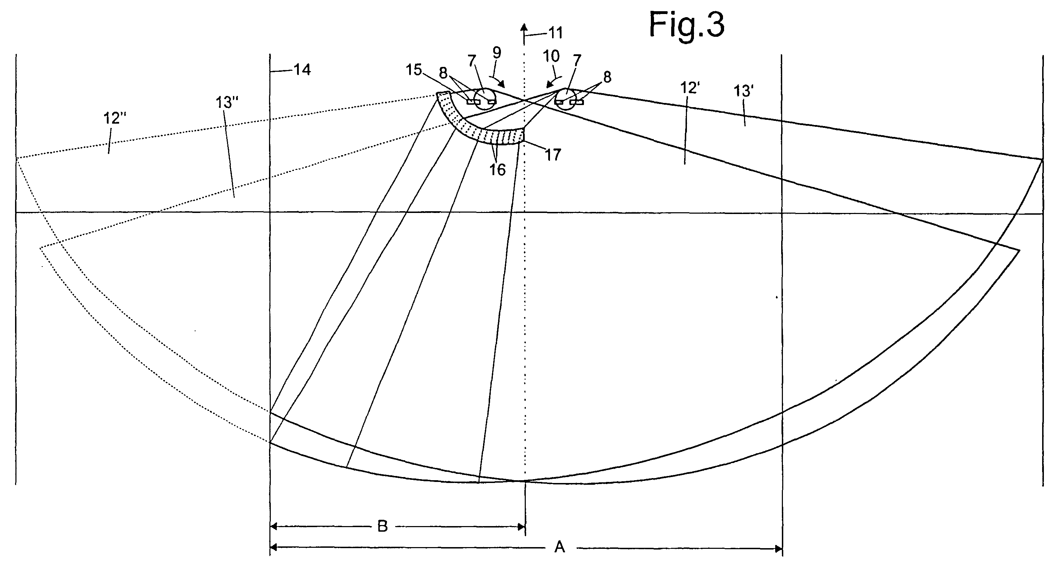

Um mit dem Schleuderdüngerstreuer an der Feldrandgrenze 14 das Grenzstreuen mit einer zur Feldrandgrenze 14 steil abfallenden Streuflanke durchführen zu können, wird auf der der Feldrandgrenze 14 benachbarten Seite des Schleuderdüngerstreuers außerhalb der Rotationsbahn der äußeren Enden 15 der dem Feldrand 14 zugewandten Seite eine die Leitelemente 16 aufweisende Grenzstreueinrichtung 17 zur Erzeugung eines Streubildes mit einer zur Grenze 14 steil abfallenden Streuflanke und zur Begrenzung der Wurfweite W der Düngerpartikel im Grenzbereich bis zur Feldrandgrenze 14 angeordnet. Diese Grenzstreueinrichtung 17 ist mittels geeigneter Halterungselemente am Rahmen 1 bzw. am Vorratsbehälter 2 des Schleuderdüngerstreuers befestigt, so daß sie zur Erzeugung des Grenzstreubildes in den Düngerstrom eingeschwenkt wird, um die Düngerpartikel, wie in Fig.3 dargestellt, abzulenken und die in Fig.3 mit durchzogenen Linien dargestellten Streufächer 12` und 13', die um die mit gestrichelten Linien eingezeichneten Bereiche 12" und 13" der Streufächer 12 und 13 gemäß Fig.2 verkleinert sind, erzeugt, während sie, zur Erzeugung des Streubildes gemäß Fig.2 aus dem Düngerstrom herausgeschwenkt ist. Die Leitelemente 16 der Grenzstreueinrichtung 17 sind in die Wurfbahnen der Düngerkörner beider Streufächer 12 und 13 gemäß Fig.2 eingeschwenkt und im der Grenze 14 benachbarten Bereich eingreifend angeordnet, so daß von beiden Schleuderscheiben 7 keine Düngerpartikel über die Feldrandgrenze 14 hinaus geworfen werden. Die Leitelemente 16 der Grenzstreueinrichtung 17 sind im der Schleuderscheibe 7 zugewandten Bereich etwa tangential zur Abwurfrichtung der Düngerkörner angeordnet und im sich anschließenden Bereich, die die Ablenkrichtung festlegt, gegenüber der ursprünglichen Abwurfrichtung der Düngerkörner entgegengesetzt der Drehrichtung 9 der Wurfschaufeln 8 und nach hinten ablenkend angestellt. Die Leitelemente 16 bestehen aus zwei winkelig zueinander angestellten Ebenen Flächen. Die Abwinkelung der Flächen zueinander nimmt von Leitelement 16 zu Leitelement 16, in Drehrichtung 9 der Schleuderscheibe 7 gesehen, zu. Die Feldrandgrenze 14, an welcher das Rand- oder Grenzstreuen durchgeführt werden soll, liegt in halber, welches der Entfernung B entspricht, Arbeitsbreite von der Mitte des Zentrifugaldüngerstreuers entfernt.

## Patentansprüche

1. Schleuderdüngerstreuer mit einem Dosierorgane aufweisenden Vorratsbehälter (2), unter dem zumindest zwei Wurfschaufeln (8) aufweisende und rotierend angetriebene Schleuderscheiben (7) angeordnet sind, wobei jede Schleuderscheibe durch das Abschleudern der Düngerpartikel einen Streufächer (12, 13) erzeugt, wobei zur Erzeugung einer gleichmäßigen Verteilung des auszubringenden Düngers bei unterschiedlichen Arbeitsbreiten (A) und Wurfweiten (W) für verschiedene Düngersorten die Wurfschaufeln (8) und / oder die Aufgabefläche des Düngers auf den Schleuderscheiben (7) entsprechend einstellbar sind, wobei die Schleuderscheiben (7) in einen einander entgegengesetzten Drehsinn (9, 10) angetrieben sind, und im einander zugewandten Bereich, bei Anordnung hinter dem Ackerschlepper gegen die Fahrtrichtung (11) drehen, wobei die Wurfschaufeln (8) und / oder die Aufgabenflächen des Düngers auf den Schleuderscheiben (7) derart einstellbar sind, daß die Streufächer (12, 13) sich um zumindest 50% überdecken, vorzugsweise zumindest annähernd vollständig überdecken, wobei außerhalb der Rotationsbahn der äußeren Enden (15) der Wurfschaufeln (8) zumindest eine Leitelemente (16) aufweisende Grenzstreueinrichtung (17) zur Erzeugung eines Streubildes mit einer zur Grenze (14) steil abfallenden Streuflanke und zur Begrenzung der Wurfweite (W) der Düngerpartikel im Grenzbereich (14) angeordnet ist, daß die Leitelemente (16) der Grenzstreueinrichtung (17) in die Wurfbahn der Düngerkörner beider Streufächer (12, 12', 13, 13`) im der Grenze (14) benachbarten Bereich eingreifend angeordnet sind.

2. Schleuderdüngerstreuer nach Anspruch 1, **dadurch gekennzeichnet, daß** die Wurfschaufeln winkelverschwenkbar und in verschiedenen Positionen einstellbar auf den Schleuderscheiben angeordnet sind.

3. Schleuderdüngerstreuer nach Anspruch 1, **dadurch gekennzeichnet, daß** die Schleuderscheiben austauschbar auf ihren Antriebswellen angeordnet und gegen Schleuderscheiben mit anders ausgebildeten und / oder mit anderen Winkeln angestellten Schleuderscheiben austauschbar sind.

4. Schleuderdüngerstreuer nach Anspruch 1, **dadurch gekennzeichnet, daß** der Achsabstand (a) der Schleuderscheiben (7) zumindest 1200 mm, vorzugsweise 1500 mm beträgt.

5. Schleuderdüngerstreuer nach Anspruch 1, **dadurch gekennzeichnet, daß** die Leitelemente (16) der Grenzstreueinrichtung (17) im der Schleuderscheibe (7) zugewandten Bereich jeweils etwa tangential zur Abwurfrichtung der Düngerkörner angeordnet sind und im sich anschließendem Bereich, die die Ablenkrichtung festlegt, gegenüber der ursprünglichen Abwurfrichtung entgegengesetzt der Drehrichtung (9) der Wurfschaufeln (8) und nach hinten ablenkend angestellt sind.

6. Schleuderdüngerstreuer nach Anspruch 5, **dadurch gekennzeichnet, daß** die Leitelemente (16) aus zwei winkelig zueinander angestellten ebenen Flächen bestehen.

7. Schleuderdüngerstreuer nach Anspruch 6, **dadurch gekennzeichnet, daß** die Abwinkelung der Flächen zueinander von Leitelement (16) zu Leitelement (16), in Drehrichtung (9) der Schleuderscheiben (7) gesehen, größer wird.

8. Schleuderdüngerstreuer nach einem oder mehreren der vorstehenden Ansprüche, **dadurch gekennzeichnet, daß** die Feldrandgrenze (14), an welcher das Rand- oder Grenzstreuen durchgeführt werden soll, in halber Arbeitsbreite des Zentrifugaldüngerstreuers liegt.

## Claims

1. Centrifugal fertiliser spreader including a hopper (2) with dosing members, beneath which hopper (2) are disposed at least two centrifugal discs (7), which are rotatingly driven and include throwing vanes (8), each centrifugal disc creating a broadcasting fan (12, 13) by means of the centrifuging of the fertiliser particles, the throwing vanes (8) and/or the contact surface of the fertiliser on the centrifugal discs (7) being correspondingly adjustable to create a regular distribution of the fertiliser to be broadcast where the working widths (A) and throwing widths (W) are variable for different types of fertiliser, the centrifugal discs (7) being driven in an opposing direction of rotation (9, 10) one to the other, and rotating in opposition to the direction of travel, when disposed behind the tractor, in the region facing each other, the throwing vanes (8) and/or the contact surfaces of the fertiliser on the centrifugal discs (7) being adjustable in such a manner that the broadcasting fans (12, 13) overlap each other by at least 50%, preferably at least approximately completely overlapping each other, externally of the path of rotation of the outer ends (15) of the throwing vanes (8) there being disposed at least one limited broadcasting device (17), which includes guiding members (16), for the creation of a broadcasting pattern with a broadcasting side which descends deeply towards the boundary (14) and for the defining of the throwing width (W) of the fertiliser particles in the boundary region (14), in that the guiding members (16) of the limited broadcasting device (17) are disposed so as to engage in the throwing path of the grains of fertiliser of both broadcasting fans (12, 12', 13, 13') in the region adjacent the boundary (14).

2. Centrifugal fertiliser broadcaster according to claim 1, **characterised in that** the throwing vanes are disposed on the centrifugal discs so as to be angularly pivotable and adjustable into various positions.

3. Centrifugal fertiliser broadcaster according to claim 1, **characterised in that** the centrifugal discs are disposed so as to be interchangeable on their drive shafts and are interchangeable with centrifugal discs with differently configured centrifugal discs and/or differently angled centrifugal discs.

4. Centrifugal fertiliser broadcaster according to claim 1, **characterised in that** the distance between centres (a) of the centrifugal discs (7) is at least 1200 mm, preferably 1500 mm.

5. Centrifugal fertiliser broadcaster according to claim 1, **characterised in that** the guiding members (16) of the limited broadcasting device (17) are each disposed in the region facing the centrifugal disc (7) approximately tangentially relative to the throwing direction of the grains of fertiliser and in the connecting region, which determines the defecting direction, are placed so as to deflect rearwards relative to the original throwing direction in opposition to the direction of rotation (9) of the throwing vanes (8).

6. Centrifugal fertiliser spreader according to claim 5, **characterised in that** the guide members (16) comprise two flat surfaces set at an angle to each other.

7. Centrifugal fertiliser spreader according to claim 6, **characterised in that**, when viewed in the direction of rotation of the centrifugal discs (7), the angling of the surfaces to each other from guide member (16) to guide member (16) becomes larger.

8. Centrifugal fertiliser spreader according to one or more of the preceding claims, **characterised in that** the field edge boundary (14), at which the edge broadcasting or limited broadcasting is to be carried out, is situated at half the working width of the centrifugal fertiliser spreader.

## Revendications

1. Épandeur centrifuge d'engrais comportant un récipient d'approvisionnement (2) présentant un organe de dosage, sous lequel aux moins deux disques d'éjection (7) sont entraînés en rotation et présentent des pelles de projection (8), chaque disque d'éjection (7) créant un éventail d'épandage (12, 13) par l'éjection de particules d'engrais, dans lequel pour la création d'une répartition régulière de l'engrais à sortir pour des largeurs de travail (A) et des distances de projection (W) différentes pour différents types d'engrais, les pelles de projection (8) et/ou la surface d'application de l'engrais sur les disques d'éjection (7) sont réglables en accord, les disques d'éjection (7) sont entraînés selon un sens de rotation (9, 10) opposé l'un à l'autre, et, dans la zone dirigée l'une vers l'autre, lors d'une disposition derrière le tracteur agricole, tournent contre la direction d'avancement (11), les pelles d'éjection (8) et/ou les surfaces d'application de l'engrais sur les disques de projection (7) étant réglables de manière telle que les éventails d'épandage (12, 13) se recouvrent d'au moins 50 %, alors qu'à l'extérieur de la trajectoire de rotation des extrémités extérieures (15) des pelles d'éjection (8), est disposé un dispositif d'épandage délimité (8) présentant au moins un élément de guidage (16) pour créer un profil d'épandage comportant un flanc d'épandage chutant abruptement à la limite (14) et destiné à limiter la distance de projection (W) des particules d'engrais dans la zone limite (14), de sorte que les éléments de guidage (16) du dispositif d'épandage délimité (17) sont disposés de façon à s'engager dans la zone avoisinant la limite (14), dans la trajectoire de projection des grains d'engrais des deux éventails d'épandage (12, 12', 13, 13').

2. Épandeur centrifuge d'engrais selon la revendication 1,
**caractérisé en ce que**
les pelles de projection sont disposées sur les disques d'éjection de façon à pouvoir changer d'angle et être réglées en différentes positions.

3. Épandeur centrifuge d'engrais selon la revendication 1,
**caractérisé en ce que**
les disques d'éjection sont disposés sur leur arbre d'entraînement et de façon à pouvoir être échangés contre d'autres disques d'éjection possédant d'autres angles et /ou constitués de manière différente.

4. Épandeur centrifuge d'engrais selon la revendication 1,
**caractérisé en ce que**
l'entre-axe (a) des disques d'éjection (7) est d'au moins 1200 mm, de préférence 1500 mm.

5. Épandeur centrifuge d'engrais selon la revendication 1,
**caractérisé en ce que**
les éléments de guidage (16) du dispositif d'épandage délimité (17) sont disposés dans la zone dirigée vers le disque d'éjection (7) chaque fois sensiblement de façon tangentielle à la direction de projection des grains d'engrais et sont disposés dans la zone qui succède, qui détermine la direction de déviation, par rapport à la direction de projection d'origine, à l'opposé de la direction de rotation (9) des pelles de projection (8) et déviant vers l'arrière.

6. Épandeur centrifuge d'engrais selon la revendication 5,
**caractérisé en ce que**
les éléments de guidage (16) se constituent de deux surfaces planes disposées à angle l'une par rapport à l'autre.

7. Épandeur centrifuge d'engrais selon la revendication 6,
**caractérisé en ce que**
l'angle de la disposition des surfaces l'une par rapport à l'autre s'agrandit, de l'élément de guidage (16) à l'élément de guidage (16), vu en direction de rotation (9) des disques d'éjection (7).

8. Épandeur centrifuge d'engrais selon l'une ou plusieurs des revendications précédentes,
**caractérisé en ce que**
la limite de bord de champ (14) à laquelle doit être effectué l'épandage de bord ou délimité, figure à demi largeur de travail de l'épandeur centrifuge d'engrais.
